**Europäisches Patentamt**

**European Patent Office**

**Office européen des brevets**

(11) Publication number: **0 100 242**
**B1**

(12) **EUROPEAN PATENT SPECIFICATION**

(45) Date of publication of patent specification: **29.11.89**

(51) Int. Cl.⁴: **G 02 B 13/00, H 01 S 3/00**

(21) Application number: **83304369.8**

(22) Date of filing: **28.07.83**

(54) Optical system for a laser.

(30) Priority: **28.07.82 US 402695**

(43) Date of publication of application:
**08.02.84 Bulletin 84/06**

(45) Publication of the grant of the patent:
**29.11.89 Bulletin 89/48**

(84) Designated Contracting States:
**DE FR GB IT NL**

(56) References cited:
**US-A-4 253 735**
**US-A-4 318 594**

**APPLIED PHYSICS LETTERS, vol. 41, no. 12, December 1982, pages 1121-1123, American Institute of Physics, New York, US; D.R. SCIFRES et al.: "Focusing of a 7700-A high power phased array semiconductor laser"**

(73) Proprietor: **XEROX CORPORATION**
**Xerox Square - 020**
**Rochester New York 14644 (US)**

(72) Inventor: **Scifres, Donald R.**
**1337 Montclair Way**
**Los Altos California 94022 (US)**
Inventor: **Sprague, Robert A.**
**13755 Calle Tacuba**
**Saratoga California 95070 (US)**

(74) Representative: **Weatherald, Keith Baynes et al**
**Rank Xerox Limited Patent Department 364 Euston Road**
**London NW1 3BL (GB)**

Courier Press, Leamington Spa, England.

# Description

This invention relates to an optical system for providing beam collimation or beam focusing from a multi-emitter or broad emitter semiconductor laser having a phase-locked radiation pattern emitting from a common p-n planar junction.

In conventional semiconductor lasers, the beam emitted from a facet of the laser is usually focused to a small spot in order to meet the needs of various applications, such as optical disk storage and laser printing, by means of reimaging the laser near-field pattern to the desired image plane. Examples of optical systems designed for beam forming, focusing or shaping are disclosed in US—A—4,203,652; 4,253,735, 4,318,594 and 4,323,297.

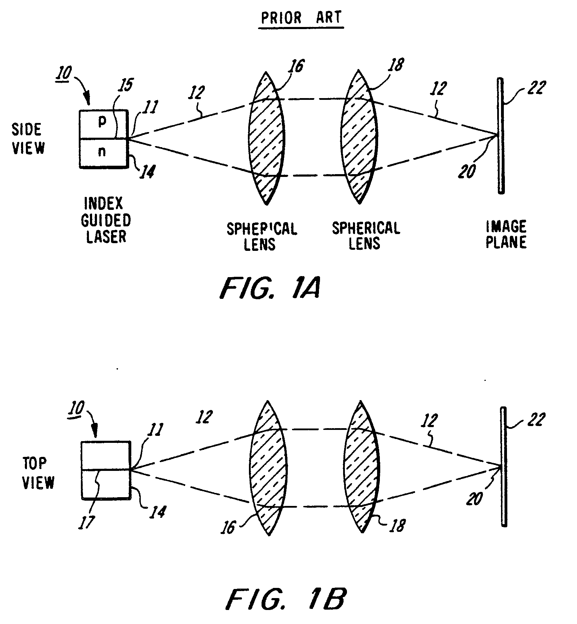

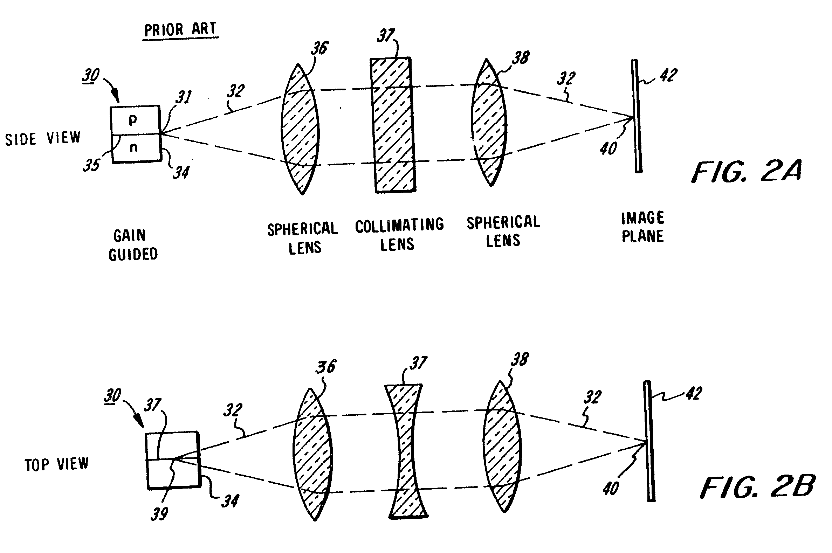

As indicated in these patents, semiconductor lasers possess different points of origin of divergence (also referred to as beam waist portions) as well as angles of divergence for radiation emitted from the laser facet in directions orthogonal to each other, i.e., in a vertical emission direction which is perpendicular to the p-n planar junction, and in a lateral emission direction which is parallel to and along the p-n planar junction. The points of origin of divergence also vary relative to different kinds of laser geometry as illustrated in Figures 1 and 2 of the accompanying drawings.

In Figure 1, the radiation beam characteristics of an index-guided laser are illustrated. An index-guided laser depends on differences in the index of refraction of materials because of the structural geometry of the laser, e.g., nonplanar layers, channels, mesas, etc., to guide the propagating radiation. As illustrated in Figures 1A and 1B, radiation in both the vertical and lateral emission directions of laser 10 has a point of origin of divergence or beam waist position 11 at the laser facet 14. This beam waist position 11 is called the near field of the laser. In side view of Figure 1A, radiation in the vertical emission direction of laser 10 has a point of origin of divergence or beam waist position 11 at facet 14 at the point of emission from the laser optical cavity as represented by the p-n junction 15. In the top view of Figure 1B, radiation in the lateral emission direction of laser 10 has a point of origin of divergence or beam waist position 11 also at facet 14 at the point of emission from the laser optical cavity, as represented by line 17, which lines is illustrative of the laser stripe geometry. Spherical lens 16 collimates beam 12 from laser 10, and spherical lens 18 focuses beam 12 to a spot 20 onto image plane 22. Because the beam waists 11 in both the vertical and lateral directions lie at facet surface 14 in an index-guided laser, the near-field pattern of the laser can be imaged into a diffraction-limited spot 20 at the image plane 22.

A more difficult situation is present in gain-guided lasers, illustrated in Figure 2, where the radiation beam characteristics are illustrated for such a laser. A gain-guided laser depends on current-dependent differences in the index of refraction of semiconductor materials comprising the structural layers of the laser to guide the propagating radiation. As illustrated in the side view of Figure 2A, radiation in the vertical emission direction of laser 30 has a point of origin of divergence or beam waist position 31 at the laser facet 34 and at the p-n planar junction 35. Spherical lens 36 collimates beam 32 from laser 30, and spherical lens 38 focuses beam 32 to a spot 40 onto image plane 42. In the top view of Figure 2B, however, radiation in the lateral emission direction of laser 30 has a point of origin of divergence or beam waist position well within laser 30, e.g., 10 to 40 µm behind facet 34, as indicated at 39. The line 35 is illustrative of the laser stripe geometry and the position of the optical cavity of the laser. Because of this factor, the image plane for the beam in the lateral emission direction will not be in the same plane as the vertical emission direction if lens 37 is omitted. As a result, lens 36 will not be at the proper focal point. With the addition of the concave collimating cylinder lens 37, however, the near field pattern of the beam 32 can be collimated for focus by lens 38 to a spot 40 onto image plane 42.

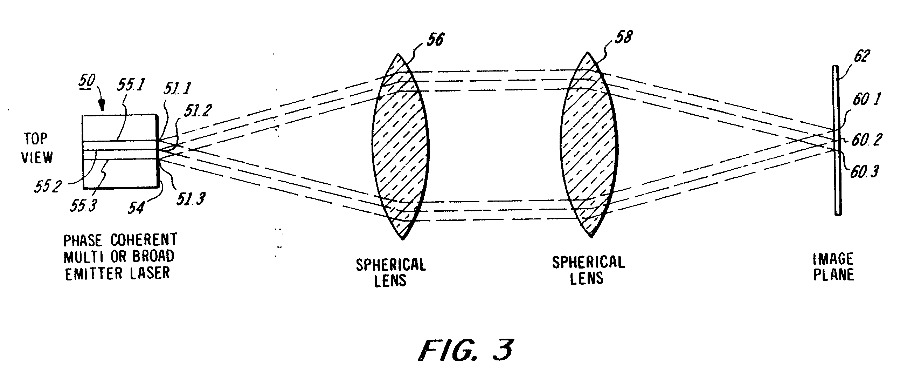

Recently, there has been increased interest in phase-locked lasers because of the increased power output provided by a laser over a single filament laser. An early illustration of such a laser is US—A—3,701,044 which discloses the optical coupling of adjacent stripe geometry lasers from which a spatially phase-locked coherent beam is produced because of the overlapping of the propagating optical wave from one laser optical cavity into an adjacent cavity. A later multi-emitter semiconductor laser is disclosed in the article of D. R. Scifres, R. D. Burnham and W. Streifer entitled "Phase-Locked Semiconductor Laser Array", Applied Physics Letters, Vol. 32(12), pp. 1015—1017, December 15, 1978. A still further improved monolithic multi-emitter laser device is disclosed in US—A—4,255,717. The power output of a recent multi-emitter semiconductor laser has been reported recently by Scifres et al at the Optical Fiber Conference in April, 1982 entitled, "Coupled Multiple Stripe Quantum Well Injection Lasers Emitting 400 mW CW". An optically-coupled multiple-stripe quantum well injection laser was disclosed which emitted up to a total of 400 mW of continuous output power, with over 140 mW CW radiation being coupled into an optical fiber. At this writing, these CW power levels have well exceeded 500 mW. What is needed now is an optical system to focus these large power outputs from multi-emitter or broad emitter lasers to a collimated beam or to a focused spot for various applications, previously mentioned. The conventional optical systems for index- and gain-guided lasers, geometrically illustrated in Figures 1 and 2, are not sufficient. This is illustrated in Figure 3, showing a top view of a multi-emitter index-guided phase-locked laser 50. The three-stripe contact geometry 55.1, 55.2 and 55.3 illustrates the emission of three beams 51.1, 51.2 and 51.3 from points of origin of divergence or beam waist position at the laser facet 54. Using the conventional optional system of Figure 1 comprising a lens system 56 to collimate the beams, and a lens system 58 to focus the beams to the image plane 62, will provide three spartially-focused spots 60.1, 60.2, and 60.3. The same multi-spot imaging would be encountered when using the conventional optical system of Figure 2 with a gain-guided laser.

What is needed in this art is an optical system that makes it possible to combine the output power of the multi-emission or broad emission from such a laser to provide a single high power coherent and collimated beam which may be further focused to a single high power spot.

According to this invention, an optical system is disclosed for producing a single beam from a multi-emitter or broad emitter semiconductor laser, comprising a broad phase-coherent emission region in one direction, and a very small radiation-emitting region in the orthogonal direction. Such a broad phase coherent region would normally be fabricated from a common p-n planar junction, e.g., US—A—4,255,717, although other broad phase coherent regions have also been disclosed and described in the art which do not have a common p-n planar junction, e.g., US—A—4,280,108.

The pattern from such a laser characteristically has one or more low angular divergence beams along the broad phase coherent emitter direction. These broad low divergence beams constitute the far-field radiation pattern of the laser. An optical system must be provided to compensate for these differing orthogonal beams, as well as to provide a single focused spot from the multi-emitter or broad emitter laser source. This is accomplished by a first lens system to focus radiation in the near-field pattern of radiation emitted from the laser in the small emission direction, normally the direction perpendicular to the p-n planar junction, and a second lens system to focus in radiation in the far-field pattern of radiation emitted from the laser in the lateral emission direction, normally the direction parallel with and along the p-n planar junction, whereby a single collimated beam is produced from the laser output. The lens system may also exclude means to focus the combined near-and far-field beams in these orthogonal directions, resulting in a single collimated beam in both axes.

It should be noted that the present invention is not limited to a multi-emitter laser but is also applicable to a broad emitter laser, i.e., any such emitter capable of producing the phase coherence effect necessary across a broad facet region as at a common p-n junction of the laser.

By collimating and focusing the far-field pattern, the highest power inteference to be present in the pattern may be imaged and formed into a diffraction-limited spot for desired beam spot modulated and scanning applications. Unwanted lower power interference lobes present in the far-field pattern may be blocked by using an aperture in the optical system.

The present invention will now be described, by way of example, with reference to the accompanying drawings, in which:

Figures 1A and 1B illustrate the conventional optical system for focusing the beam from an index-guided laser;

Figures 2A and 2B illustrate the conventional optical system for focusing the beam from a gain-guided laser;

Figure 3 illustrates the result in using conventional optics with a multi-emitter laser, whether index- or gain-guided, the result being multi-focused spots at the image plane;

Figures 4A and 4B illustrate the generic optical system of this invention for employment with a multi-emitter laser;

Figures 5A and 5B illustrate another embodiment for an optical system comprising this invention and employing an aperture;

Figures 6A and 6B illustrate a still further embodiment for an optical system comprising this invention and employing an aperture to bring to focus only the principal power diffraction order;

Figure 6C illustrates an even further embodiment for an optical system comprising this invention and employing a prism to focus more than one coherent low diverence beam from a single source to collimation and focus;

Figures 7A and 7B illustrate the embodiment shown in Figures 6A and 6B, but without means to focus the collimated beam to a spot at an image plane;

Figure 8 is the far-field pattern of a multi-emitter phase coherent semiconductor laser along the p-n planar junction of the laser;

Figure 9 is a graph illustrating the power output in milliwatts *versus* current in milliamperes for the output emission from a multi-emitter phase coherent semiconductor laser at the front facet and at the image plane employing the optical system embodiment of Figures 6A and 6B, and

Figures 10A, 10B and 10C are photographs of the focus spot at the image plane employing the optical system embodiment of Figures 6A and 6B. Figure 10A shows an unapertured image of the spot with the power output at the image plane being 11 mW. Figure 10B shows an unapertured image of the spot with the power output at the image plane being 110 mW. Figure 10C shows an apertured image of the spot with the power output at the image plane being 50 mW.

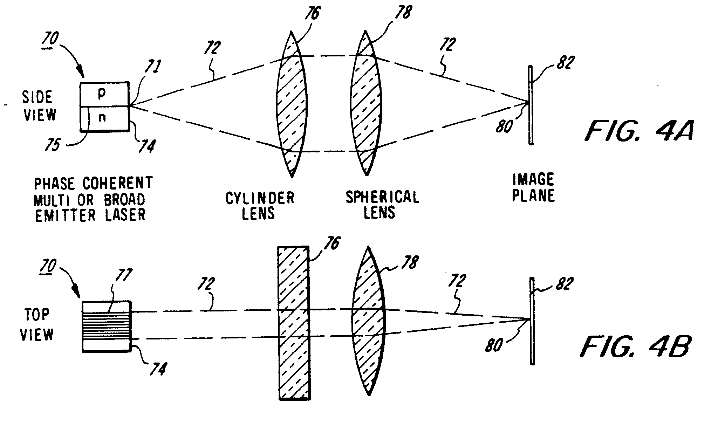

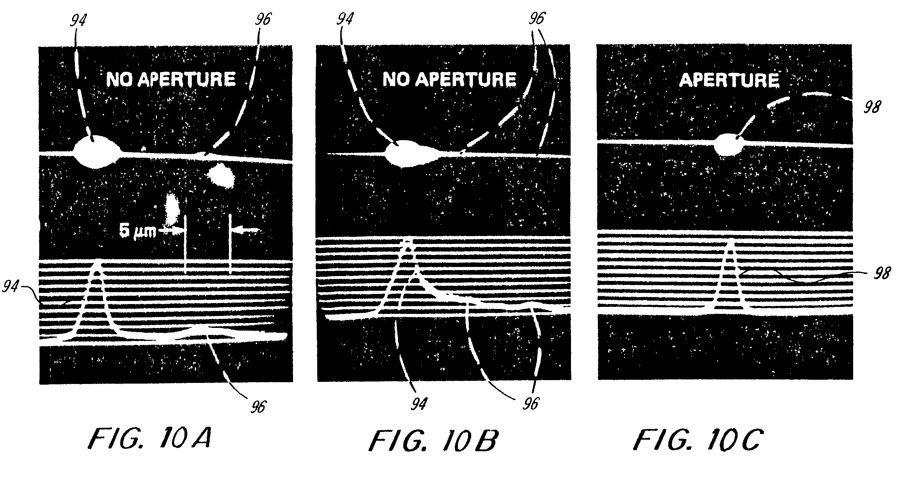

Reference is made to Figures 4A and 4B which illustrate the generic concept of the present invention. As illustrated in Figure 4A, the multi-emitter phase-locked laser 70 has a p-n planar junction 75 and a beam waist position 71 at the plane of that junction located at the laser front facet 74. As shown in the top view of Figure 4B, the laser 70 has a ten-stripe contact geometry at 77, indicative that its emission in the lateral emission direction is ten spatially-disposed emitters of radiation in the near field. These ten emitters form a broad and fairly uniform intensity phase-coherent radiation-emitting source. An example of the far-field intensity profile as a function of spatial position for such a laser is illustrated in Figure 10.

The phased laser 70 may be either of the index- or gain-guided type. This is because in the vertical emission direction of the laser illustrated in Figure 4A imaging is being accomplished for the near-field pattern of emission at the laser facet 74, in this case refocusing that pattern to a spot 80 at the image plane 82. However, in the lateral emission direction of the laser illustrated in Figure 4B, reimaging is being accomplished for the far-field pattern of emission outside and beyond the laser facet 74 at a theoretical focal point at infinity. In this case, the far-field pattern is focused to the spot 80 at the image plane 82. Since the far field pattern may provide one or more diffracted orders or interference lobes because of phase-locked emission providing interference of radiation in the region between the near and far fields, the single principle diffracted order or interference lobe may be formed onto a collimated beam or onto an image plane, as illustrated in Figures 4A and 4B.

The optical system of Figures 4A and 4B to focus the beam 72 in the vertical near-field and in the lateral far-field comprises lens system 76 and 78. In the vertical direction, cylinder lens 76 collimates the near-field pattern, and spherical lens 78 refocuses the collimated beam 72 at a spot 80 onto image plane 82. In the lateral direction, cylinder lens 76 has no optical effect, but spherical lens 74 focuses the lateral far-field pattern to the spot 80 at the image plane 82.

The ability to refocus the lateral direction emission depends on the degree of coherence across the laser emission pattern.

While the generic optical system for reimaging shown in Figure 4 is quite applicable, better refocusing can be accomplished by taking into consideration the angle of beam divergence in the lateral direction caused by diffraction because of the finite width of the laser. This diffraction makes the far-field pattern appear to diverge from a virtual point source 73 behind the rear laser facet 74'.

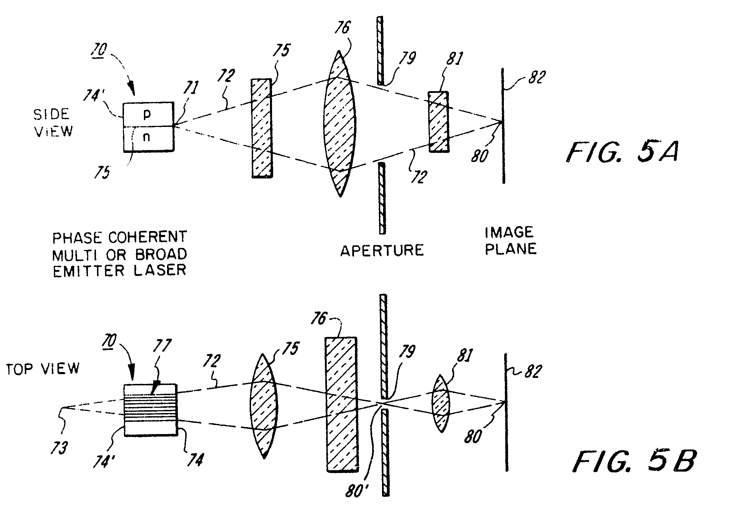

Figure 5 illustrates another embodiment for reimaging the beam from the multi-emitter laser 70. The difference illustrated here relative to the previous embodiment lies in the manner of refocusing to an intermediate image plane at spot 80', and the use of an aperture 79 to block undesirable side or lower power interference lobes or diffraction orders that may be present in the far-field pattern.

The optical system of Figure 5 differs from previous embodiments in that, in the vertical emission direction illustrated in Figure 5A, the optical system for the near-field pattern or beam waist position at 71 is focused onto image plane 82 by means of the cylinder lens 76 *via* the aperture 79. The optical system for the far-field lateral pattern illustrated in Figure 5B is first focused to an image plane at the aperture 79 by means of the cylinder lens 75. Focusing to the aperture 79 in the lateral emission direction forms an apertured spot 80' which, with cylinder lens 81 with a properly selected focal length, reimages spot 80' to spot 80 at the image plane 82.

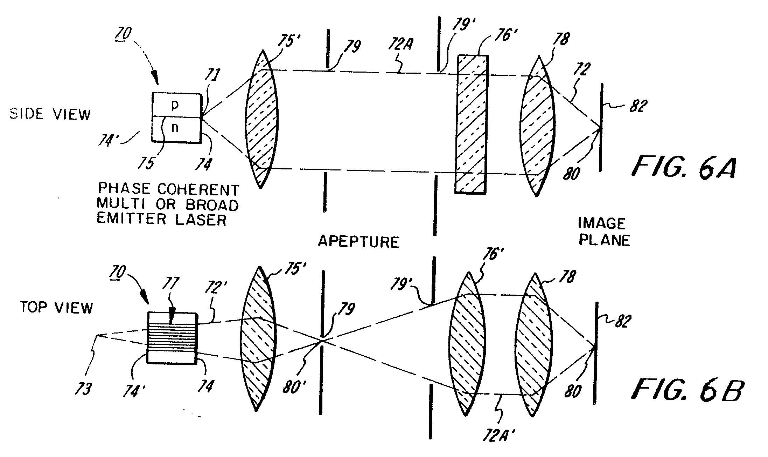

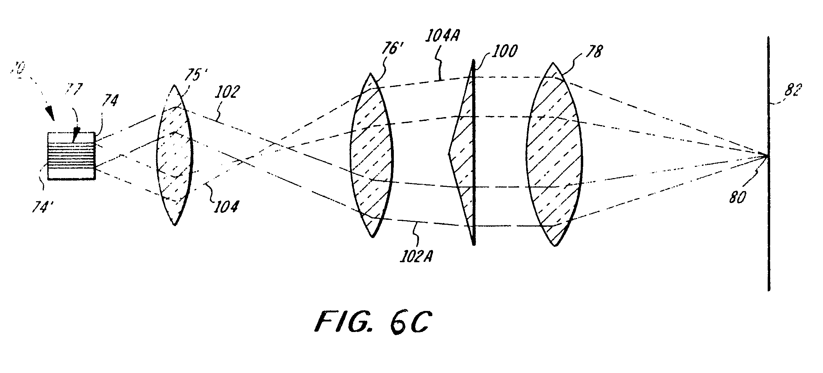

The optical system of Figure 6 is similar to the optical system of Figure 4 but differs in that reimaging in the lateral emission direction is accomplished initially for reimaging to the image plane in a manner somewhat similar to Figure 5B.

In the vertical emission direction illustrated in Figure 6A, the near-field spot 71 emission is collimated by spherical lens 75' and the collimated beam 72A is refocused to spot 80 at the image plane 82 by means of spherical lens 78. Spot 80 in Figure 6A, therefore, is an image of the near-field spot at 71. In the lateral emission direction illustrated in Figure 6B, the same spherical lens 75' reimages the far field pattern 72' to a spot 80' at aperture 79. Spot 80' is then reimaged by cylinder lens 76' to a collimated beam 72A', which is refocused to spot 80 in the image plane 82 by spherical lens 78.

It should be noted that aperture 79 is not necessary if a single low divergence far field lobe, vis-a-vis a multiple far-field lobe pattern, is emitted by the laser, since only a single spot will be formed at the image plane 82 under these conditions. Also, it should be noted that other apertures may be positioned at other locations in the optical path, such as illustrated at 79' in Figures 6A and 6B in order to select a single radiation beam angle.

Lastly, it should be noted that where two or more low divergence beams may be present in the lateral emission direction, such as angularly-emitted beams 102 and 104 illustrated in Figure 6C, absolute collimation of these beams together is not possible at the same position as lens 76', as illustrated at beam positions 102A and 104A. Finality in collimation may be achieved by a multifaceted prism 100 positioned between lens 76' and 78. Prism 100 brings the two beams 102 and 104 into final collimation at lens 78 for focus to a single spot 80.

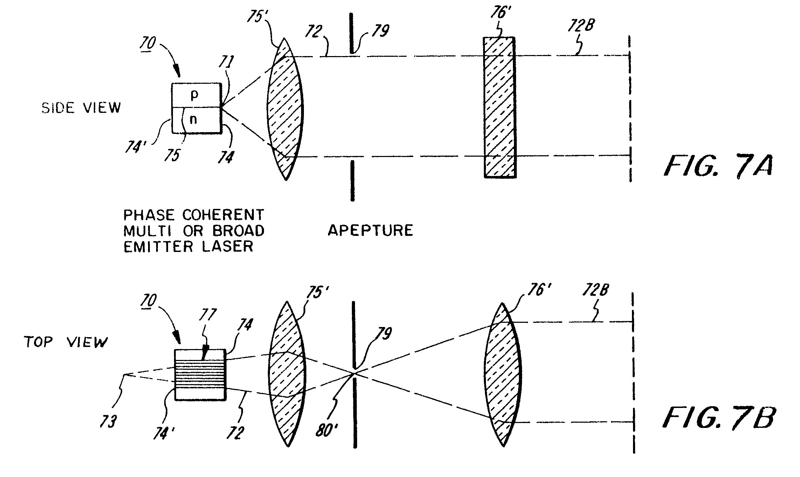

Figures 7A & B are basically the embodiments shown in Figures 6A and 6B but absent the spherical-lens 78 for refocusing the collimated beam 72 to a spot 80. In Figures 7A and 7B, the spherical lens 75' collimates the vertical near-field emission while focusing the lateral far-field emission to spot 80'. Cylinder lens 76' reimages the vertical and lateral beam 72 to collimation, forming the orthogonal collimated beam 72B.

The laser employed comprised a multi-emitter semiconductor laser 70 having ten phase-locked emitters, as represented at 77 in Figure 6B, capable of emitting up to about 200 mW of CW output power (approximately 200 mW per laser facet) at 770 nm. The external differential quantum efficiency from both facets was about 65%. Laser 70 consisted of 10 parallel proton implanted three μm wide stripe geometry lasers on 10 μm centers on a single semiconductor substrate of n-type GaAs. There are no direct couplers between the stripes along the length of the laser, as disclosed in US—A—4,255,717. Rather, phase-locking is achieved by overlapping wave coupling because of the close proximity of adjacent laser cavities, as found in the structure disclosed in the Scifres *et al* article entitled "Phase-Locked Semiconductor Laser Array", *supra*. In addition, the active region of the laser consisted of a single 60 nm thick layer of undoped $Ga_{0.85}Al_{0.15}As$. The p- and n-type cladding layers were composed of $Ga_{0.35}Al_{0.65}As$ and were 2.5 μm thick. A 0.6 μm thick p+ GaAs cap layer was used to obtain good ohmic contact. Buffer layers approximately 0.5 nm thick and composed of $Ga_{0.8}Al_{0.2}As$ were fabricated between the substrate and the n-type cladding layer and between the p-type cladding layer and the p+ GaAs cap. The proton damage extended through the cap layer to a depth of about 1 μm. The laser chips were cleaved to a length of 250 mm and were mounted p-side down with Indium solder. The laser were operated under both pulsed (300 nsec pulse width, 5 kHz repetition rate) and CW conditions.

As to the optical system employed, the radiation was collected by the high numerical aperture microscope lens 75', specifically a 40×0.65 N.A. objective. The vertical near-field emission was collimated by the objective lens 75', while the lateral far-field emission was focused behind the objective to spot 80'. Although the laser beam is highly collimated in the lateral direction, it still diverges slightly, as previously mentioned, because of diffraction, causing the far-field focus point to occur at a distance slightly beyond the focal length of lens 75'.

Cylinder lens 76' had a 333 mm focal length and was used to collimate the light emerging from the focused far field spot 80'. This collimated beam is then focused by the lens 78, specifically a 20×0.4 N.A. objective, to the spot 80 on image plane 82.

Because phase-locked lasers may emit some power into other lateral directions, it may be desirable to use the slit aperture 79 at the lateral far-field focal point to eliminate all but the primary lateral far-field interference lobe. For the multi-emitter laser detailed here, it was desirable to employ an aperture, as determined by its far-field pattern shown in Figure 10. In order to access the position where the aperture was needed, a portion of the housing on the objective lens 75' has to be removed.

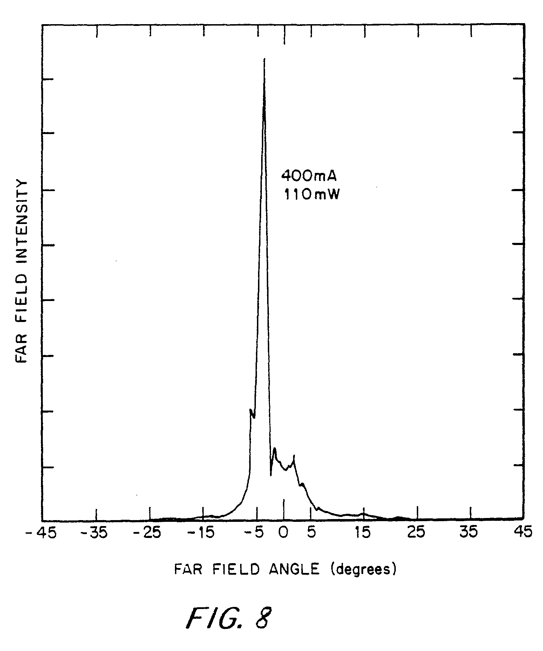

The current level employed laser operation was 400 mA, and the output power per facet was at 110 mW. As is evident from Figure 8, 60—70% of the optical power is concentrated in a single low divergence interference lobe at an angle of about minus 4° from the facet normal. The emission at an angle of about 4° from the facet normal is because of the fact that there is a non-zero phase shift between the laser emitters. The half width of the far-field pattern is about 1.3°. This is to be compared with the theoretical divergence limit from a uniformly illuminated 93 μm wide aperture, which would be about 0.5°.

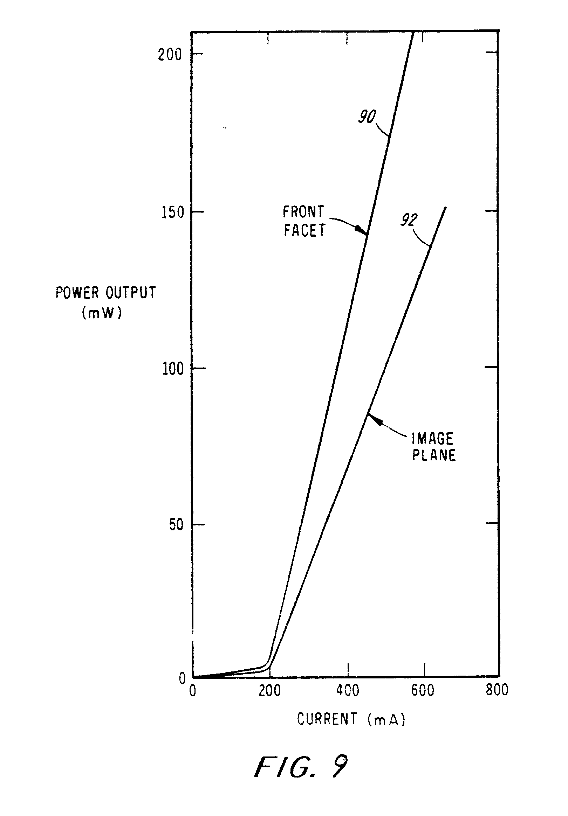

In order to demonstrate that the laterally collimated output beam may be focused to a single spot, the laser 70 was aligned in the optical system shown in Figure 6. Shown in Figure 9 is the pulsed optical output vs. current curves 90 and 92, respectively, for the output at the front facet 74 of the laser and for the output at the image plane 82.

As shown in Figure 9, the laser threshold is about 200 mA, corresponding to a threshold current density of 800 $A/cm^2$. The output vs. current curve 90 at the facet is linear to over 200 mW. Under DC bias conditions, the laser threshold is about 210 mA and the device fails catastrophically at a CW output of 210 mW from an unprotected or uncoated facet. The output vs. current curve 92 at the image plane is also linear indicating that the laser mode pattern is stable with increasing current. Approximately 60% of the optical power emitter from the laser facet is transferred to the image plane 82 by the optical system.

Focused spots producable at the image plane 82 by the optical system of Figure 7 are shown in Figure 10, along with corresponding lateral intensity scan lines indicative of output power intensity. Specifically, Figure 10A shows imaged spots 94 and 96 when the optical power at the image plane 82 is measured at about 11 mW. In this case, no aperture 79 was employed to eliminate lower power far-field lobes 96 emitted at angles other than the primary lobe. The primary lobe at about minus 4° can be seen imaged at spot 94.

Figure 10B shows an unapertured image, with 110 mW at the image plane 82. As shown by the lateral intensity scan lines, about 70% of the power lies in the dominant imaged spot 94, while other power is emitted at different far-field and larger angles indicated at 96.

Figure 10C shows apertured image with aperture 79 placed in the optical system as illustrated in Figure 6. In this case, a uniform spot 98 of about 2.5 μm diameter and containing 50 mW of output power was formed. The half width of the spot 98 based on an intensity scan is about 2.0 μm, which is near the diffraction limit (approximately 1.9 μm) of the 20×0.4 N.A. focusing objective lens 78. Optics employed were ordinary microscope objectives which were not antireflection coated for infrared emission from the laser 70.

In conclusion, a phase-locked multi-emitter laser can emit over 150 mW of output power into a single stable low divergence lateral beam. By employing an optical system in which the lateral far-field pattern is imaged, this type of laser can be collimated and brought to focus in a single spot, thus allowing these high power semiconductor devices to be used in higher power applications, such as laser printing and optical recording.

As previously mentioned, phase coherent broad emitter lasers with fairly uniform emission intensity across a broad lateral region of the laser facet may be focused to a spot using the optical system of this invention. Also, depending upon the degree of concentration of the laser radiation into a single principal diffracted order or interference lobe, it may be desirable to recombine the radiation from two or more diffracted orders through the use of a mirror, grating assembly or prism. Since the diffracted beams emergy from the laser at different angles, the prisms may be employed to render the emerging beams collinear. The prisms can be replaced with angled mirrors or diffraction grating segments with different spatial frequencies to achieve the same result.

## Claims

1. An optical system for collimating the radiation emitted from a semiconductor laser (70), which radiation is emitted from a point on the exit face (74) of the laser when viewed in a first direction within the exit face, and from a virtual point far behind the exit face (74) when viewed in the orthogonal, second, direction, the optical system including a first lens (75, 75') focusing the radiation in the orthogonal direction to an intermediate image plane,

characterised in that a slit-like aperture (79) is provided in the intermediate image plane for blocking sidelobes of the intermediate image in the orthogonal direction,

and in that a cylinder lens (81, 76') is provided for collimating the radiation from the aperture to a parallel beam (72B) or to a spot (80).

2. An optical system for focusing the radiation emitted from a semiconductor laser (70) to a spot in an image plane, which radiation is emitted from a point on the exit face (74) of the laser when viewed in a first direction within the exit face, and from several virtual points far behind the exit face (74) when viewed in the orthogonal, second, direction,

characterised in that the optical system includes a multi-faceted prism or diffraction grating (100) positioned between spherical lenses (75', 76', 78).

3. The optical system of claim 1 or 2, wherein the radiation is brought into focus in a single spot by the lens system.

4. The optical system of any preceding claim, wherein the lens system comprises a spherical collecting lens (75') to collimate the beam in the first direction, and to form an aerial image in the second direction, a cylinder lens (76') to collimate the beam in the second direction, and a focusing lens (78) to bring the combined collimated beam to a focus at an image plane.

5. The optical system of claim 1 or any claim dependent therefrom, wherein the lens system includes a combination of cylinder lenses, one cylinder lens (76) having a focal length to focus the beam in the first direction on to the image plane, and a combination of second and third cylinder lenses to focus the beam in the second direction on to the image plane.

6. The optical system of claim 1 or any claim dependent therefrom, wherein the lens system includes a combination of a cylinder lens (76') and a pair of spherical lenses (75', 78), the spherical lenses having a focal length to collimate and focus the beam in the first direction on to the image plane, the first spherical lens (75') also acting to focus the beam in the second direction to a spot, the cylinder lens (76') collimating the beam in the second direction diverging from its initial focus, and the second spherical lens also focusing the beam in the second direction on to the image plane.

## Patentansprüche

1. Optisches System zum Sammeln der von einem Halbleiterlaser (70) emittierten Strahlung, die von einem Punkt der Austritts-Stirnfläche (74) des Lasers emittiert wird, gesehen in einer ersten Richtung innerhalb der Austritts-Stirnfläche, und von einem virtuellen Punkt weit hinter der Austritts-Stirnfläche (74) emittiert wird, gesehen in der zweiten, orthogonalen Richtung, wobei das optische System eine erste Linse (75, 75') einschließt, welche die Strahlung in der orthogonalen Richtung in eine Zwischenbildebene fokussiert,

dadurch gekennzeichnet, daß eine schlitzartige Öffnung (79) in der Zwischenbildebene vorgesehen ist, um Seitenstreifen des Zwischenbilds in der orthogonalen Richtung abzublocken,

und daß eine Zylinderlinse (81, 76') vorgesehen ist, um die Strahlung von der Öffnung in einem parallelen Strahl (72B) oder einem Punkt (80) zu sammeln.

2. Optisches System zum Fokussieren der von einem Halbleiterlaser (70) emittierten Strahlung in einem Punkt in einer Bildebene, wobei die Strahlung von einem Punkt auf der Austrittsstirnfläche (74) des Lasers emittiert wird, gesehen in einer ersten Richtung innerhalb der Austritts-Stirnfläche, und von mehreren virtuellen Punkten weit hinter der Austritts-Stirnfläche (74), gesehen in der zweiten, orthogonalen Richtung,

dadurch gekennzeichnet, daß das optische System ein mit zahlreichen Facetten versehenes Prisma oder Beugungsgitter (100) aufweist, das zwischen sphärischen Linsen (75', 76', 78) angeordnet ist.

3. Optisches System nach Anspruch 1 oder 2, bei welchem die Strahlung in einem einzigen Punkt durch das Linsensystem fokussiert wird.

4. Optisches System nach einem der vorstehenden Ansprüche, bei welchem das optische System eine sphärische Sammellinse (75') zum Kollimieren des Strahls in der ersten Richtung und zur Erzeugung eines scheinbaren Bildes in der zweiten Richtung aufweist, eine Zylinderlinse (76') zum Kollimieren des Strahls in der zweiten Richtung, und eine Fokussierlinse (78), um den kombinierten kollimierten Strahl in einer Bildebene zu fokussieren.

5. Optisches System nach Anspruch 1 oder einem der von diesem abhängigen Ansprüche, bei welchem das Linsensystem eine Kombination von Zylinderlinsen aufweist, wobei eine Zylinderlinse (76) eine Brennweite aufweist, um den Strahl in der ersten Richtung auf die Bildebene zu fokussieren, und eine Kombination zweiter und dritter Zylinderlinsen aufweist, um den Strahl in der zweiten Richtung auf der Bildebene zu fokussieren.

6. Optisches System nach Anspruch 1 oder einem der von diesem abhängigen Ansprüche, bei welchem das Linsensystem eine Kombination aus einer Zylinderlinse (76') und einem Paar von sphärischen Linsen (75', 78) aufweist, die sphärischen Linsen eine Brennweite aufweisen, um den Strahl in der ersten Richtung zu kollimieren und auf der Bildebene zu fokussieren, die erste sphärische Linse (75') auch dazu dient, den Strahl in der zweiten Richtung auf einen Punkt zu fokussieren, die Zylinderlinse (76') den Strahl in der zweiten Richtung divergierend von seinem ursprünglichen Brennpunkt kollimiert, und die zweite sphärische Linse den Strahl auch in der zweiten Richtung auf die Bildebene fokussiert.

**Revendications**

1. Système optique pour collimater le rayonnement émis par un laser à semi-conducteur (70), rayonnement qui est émis par un point de la face de sortie (74) du laser lorsqu'on le voit dans une première direction à l'intérieur de la face de sortie, et par un point virtuel bien à l'arrière de la face de sortie (74) lorsqu'on le voit dans la seconde direction, orthogonale, le système optique comportant une première lentille (75, 75') focalisant le rayonnement dans la direction orthogonale sur un plan-image intermédiaire,

caractérisé en ce qu'une ouverture (79) en forme de fente est ménagée dans le plan-image intermédiaire pour bloquer les lobes latéraux de l'image intermédiaire dans la direction orthogonale,

—et en ce qu'une lentille cylindrique (81, 76') est prévue pour collimater le rayonnement provenant de l'ouverture en faisceau parallèle (72B) ou en un point (80).

2. Système optique pour focaliser le rayonnement émis par un laser à semi-conducteur (70) sur un point d'un plan-image, rayonnement qui est émis par un point de la face de sortie (74) du laser lorsqu'on le regarde dans une première direction à l'intérieur de la face de sortie, et par plusieurs points virtuels bien à l'arrière de la face de sortie (74) lorsqu'on la regarde dans la seconde direction, orthogonale,

caractérisé en ce que le système optique comprend un prisme ou réseau de diffraction à facettes multiples (100) placé entre des lentilles sphériques (75', 76', 78).

3. Système optique selon la revendication 1 ou 2, dans lequel le rayonnement est amené au foyer dans un seul point par le système de lentilles.

4. Système optique selon l'une quelconque des revendications précédentes, dans lequel le système de lentilles comprend une lentille sphérique de collecte (75') pour collimater le faisceau dans la première direction, et pour former une image aérienne dans la seconde direction, une lentille cylindrique (76') pour collimater le faisceau dans la seconde direction, et une lentille de focalisation (78) pour amener le faisceau collimaté combiné à un foyer dans le plan-image.

5. Système optique selon la revendication 1 ou l'une quelconque des revendications en dépendant, dans lequel le système de lentilles comprend une combinaison de lentilles cylindriques, une lentille cylindrique (76) ayant une distance focale de manière à focaliser le faisceau dans la première direction sur le plan-image, et une combinaison de seconde et troisième lentilles cylindriques pour focaliser le faisceau dans la seconde direction sur le plan-image.

6. Système optique selon la revendication 1 ou l'une quelconque des revendications en dépendant, dans lequel le système de lentilles comprend une combinaison d'une lentille cylindrique (76') et d'une paire de lentilles sphériques (75', 78), les lentilles sphériques ayant une distance focale pour collimater et focaliser le faisceau dans la première direction sur le plan-image, la première lentille sphérique (75') agissant également pour focaliser le faisceau dans la seconde direction en un point, la lentille cylindrique (76') collimatant le faisceau dans la seconde direction divergeant par rapport à son foyer initial, et la seconde lentille sphérique focalisant aussi le faisceau dans la seconde direction zur le plan-image.

PRIOR ART

SIDE VIEW

INDEX GUIDED LASER

SPHERICAL LENS

SPHERICAL LENS

IMAGE PLANE

*FIG. 1A*

TOP VIEW

*FIG. 1B*

_30_

_31_ _32_ _36_ _37_ _38_ _32_ _42_

SIDE VIEW

p

n

_35_ _34_ _40_

_FIG. 2A_

GAIN
GUIDED

SPHERICAL
LENS

COLLIMATING
LENS

SPHERICAL
LENS

IMAGE
PLANE

_30_ _37_ _32_ _36_ _37_ _38_ _32_ _42_

TOP VIEW

_39_ _34_ _40_

_FIG. 2B_

EP 0 100 242 B1

**FIG. 3**

TOP VIEW

*50* *55.1* *51.1* *51.2*

*55.2* *55.3* *54* *51.3*

PHASE COHERENT MULTI OR BROAD EMITTER LASER

*56* *58* *62*

*60.1* *60.2* *60.3*

SPHERICAL LENS

SPHERICAL LENS

IMAGE PLANE

EP 0 100 242 B1

FIG. 4A

SIDE VIEW

PHASE COHERENT
MULTI OR BROAD
EMITTER LASER

CYLINDER
LENS

SPHERICAL
LENS

IMAGE
PLANE

FIG. 4B

TOP VIEW

4

FIG. 5A

SIDE VIEW

PHASE COHERENT
MULTI OR BROAD
EMITTER LASER

APERTURE

IMAGE
PLANE

TOP VIEW

FIG. 5B

SIDE VIEW

70

71

p

n

74'

75

74

PHASE COHERENT
MULTI OR BROAD
EMITTER LASER

75'

79

72A

79'

76'

78

72

82

APEPTURE

IMAGE
PLANE

FIG. 6A

TOP VIEW

70

77

72'

75'

79

76'

78

79'

82

73

74'

74

80'

72A'

80

FIG. 6B

EP 0 100 242 B1

9

FIG. 6C

EP 0 100 242 B1

SIDE VIEW

70
71
p
n
74'  75  74
75'  72  79
76'  72B

*FIG. 7A*

PHASE COHERENT
MULTI OR BROAD
EMITTER LASER

APEPTURE

TOP VIEW

70
77  74
73  74'  72
75'
79
80'
76'  72B

*FIG. 7B*

EP 0 100 242 B1

FIG. 8

FIG. 9

FIG. 10C

FIG. 10B

FIG. 10A